# EUROPEAN PATENT SPECIFICATION

(11) **EP 2 865 649 B1**
(45) Date of publication and mention of the grant of the patent: **12.10.2016**
(21) Application number: 14189684.5
(22) Date of filing: 21.10.2014
(51) Int. Cl.: C02F 1/28, C02F 1/72, B01J 20/10, B01J 21/06, B01J 23/16, C02F 11/08, C10G 19/08, C02F 103/36, C02F 103/10, C02F 103/16, C02F 103/24

(54) **Process for the disposal of intractable non-biodegradable waste material flows from oil refineries**
Verfahren zur Entsorgung von hartnäckigen, biologisch nicht abbaubaren Materialströmen aus Erdölraffinerien
Procédé pour la neutralisation des courants de matériau déchet tenace, non biodégradable, issus du raffinage du pétrole

(30) Priority: 22.10.2013 HU 1300601
(43) Date of publication of application: 29.04.2015
(73) Proprietor: MOL Magyar Olaj- és Gázipari Nyilvánosan Müködö Részvénytársaság, 1117 Budapest (HU)
(72) Inventor: Baladincz, Jenö, 2900 Komárom (HU); Petró, József, 2440 Százhalombatta (HU); Csengö , Károly, 2440 Százhalombatta (HU); Keresztényi, István, 2440 Százhalombatta (HU); Léder, László, 2440 Százhalombatta (HU); Kovács, András, 1083 Budapest (HU); Auer, Róbert, 2890 Tata (HU); Buzás, Sándor, 1145 Budapest (HU)
(74) Representative: Schläfer, Laszlo

(56) References cited:
- US-A- 3 672 836
- US-A- 5 360 552
- US-A- 5 380 442
- US-A- 5 470 486

## Description

### FIELD OF THE INVENTION

The present invention relates to the catalytic, wet disposal treatment of persistent, non-biodegradable oil refinery waste material flows, hazardous substances with high alkali, sulfide, polysulfide and mercaptan content, using an appropriate, combined, alternate-cycle operation method and a suitable catalyst composition such that wastewater material flow loaded with organic matter of a COD value greater than 150000 mg O2/dm3 is remediated to such a degree at a lower pressure and temperature than industrial operation standard with a catalyst of high Ni content that the treated material flow may be treated in a biological wastewater treatment plant, the cleansed material flow thereof may be discharged into surface waters.

### BACKGROUND OF THE INVENTION

It is general knowledge that the organic components of wastewater may be treated by oxidation. The organic compounds of simple household and communal wastewater flows are utilized by microbiological colonies as an energy source. Under suitable conditions - dissolved oxygen and nutrient contents, temperature; pH and the like - contaminants are broken down into carbon-dioxide and water in a cascade of biochemical reactions by microorganisms. Domestic wastewater having a relatively low organic content is treated in decentralized or centralized wastewater treatment plants by mimicking natural biological oxidation and is directed into the surface water collecting systems with the proviso that the required, admissible characteristics of discharge are met.

Biological cleansing cannot be applied to wastewater which is toxic to the microbiological colonies and/or bacteria degrading it or utilizing it as an energy source; which is degrading too slowly in the biological system or which is not degradable. Contaminants regarded persistent to degradation may be broken down into similar end products, i.e. carbon-dioxide and water in a chemical oxidation process. The criterion of biological degradation is apparently the sufficient efficiency of the required degradation by the microbiological colony of the wastewater treatment plant. This criterion is conventionally defined by a value of COD : BOD≤2 of the ratio of chemical oxygen demand [COD, mgO₂/dm³] and biological oxygen demand [BOD, mgO₂/dm³] according to a rule generally accepted in practice. The ratio of COD : BOD is considered as a reference point only herein, the criterion of suitability of the disposal treatment is whether biological degradation can be initiated by the treatment. The importance of this approach is that BOD is suitable feature monitoring the aerobic degrading but the kinetic of forming biogas is suitable feature monitoring the anaerobic degradation.

Wastewater flow typically of a very high COD equivalent, which is a wastewater that comprises typically toxic and stench generating hazardous waste components, which is dangerous to bacteria active in wastewater cleaning is generated in the course of various technological processes of oil refining. Used MEROX lye, referred to as wastewater flow in the present description is an example thereof. The said refinery wastewater is non-biodegradable, i.e. the COD: BOD ratio approaches infinity. Waste flows adjusted to pH 7.5, supplemented with appropriate nutrients but without other treatment bar the activity of the microbial community under conditions suitable for anaerobic degradation.

Such waste material flows are generated during refining fuels with the boiling point of gas and petrol by an aqueous solution of sodium hydroxide. Dissolved hydrogen sulfide and mercaptan type compounds form a water soluble salt and can be washed out with the aquatic phase in this procedure. The typical dimensions of the refineries allow the regeneration of the lye by the separation of the sulfur containing material flow and the recycling thereof into the neutralization process. Sulfur compounds are converted into oil soluble disulfide compounds by means of a catalytic oxidation in the regeneration process. The inorganic lye phase is recycled following the separation of the organic and inorganic phase and the material flow comprising the disulfide compounds is treated by a suitable method. The regeneration process may be carried out until the saturation of the inorganic (extract) material flow with organic and inorganic matter inhibits the efficient separation of phases. Separation of disulfide oils is not a spontaneous process as the dimethyl, diethyl and/or methyl ethyl disulfides mainly present have a density and boiling point similar to that of the aquatic medium. Washing with petrol, kerosene and sand filtration of the residual products is applied therefore to refine organic and inorganic phases. The inorganic phase is suitable to convert the hydrogen sulfide and mercaptan compounds into a water soluble salt form and to recycle them into the process.

US 3 672 836 A (Brown Kenneth M) 27 june 1972 discloses treatment of an aqueous stream containing water-soluble inorganic sulphide compounds involving the use of a first catalyc oxidation step which is run at relatively low temperatures and pressures to produce polysulfide, coupled with a second catalytic oxidation step which is run at relatively high temperatures and pressures to selectively oxidize the polysulfide to elemental sulphur, thereby preventing the deposition of elemental sulfur on the catalyst used during these oxidation steps while simultaneously minimizing the amount of oxygen which must be supplied at the relatively gih pressures.

The MEROX catalyst oxidizing sulfides to disulfides needs to be regenerated when pressure drop due to adsorption in the reactor approaches the admissible value of 70 kPa. The activated carbon catalyst bed is washed with hot water, adsorbed organic compounds and soaps formed by lye, residual lye are eliminated from inside the pores and their surfaces. Activated carbon is washed with glacial acetic acid to expose active sites and to decrease the pH of the effluent water flow to 5-5.5 thereby allocating novel organic compounds into the waste waterflow that are potentially persistently resistant to oxidation. Washing is carried out by hot ion-free water at a temperature of from 85 to 90°C until the stable pH range of 8-9 has been reached. Activated carbon, which adsorbs polar compounds with high efficiency, being the carrier of the catalytic oxidation makes regeneration even more difficult. Desorbed components formed in the desorption (activation) process to expose the surface of the catalyst change the color of the inorganic material flow to yellow. The iron chelate catalyst mixture is circulated through the MEROX catalyst in the reactor following the preparation of the catalyst to regenerate the proper amount of active centra. The catalyst is conditioned by a lye following the binding of the active material amount. The MEROX lye material flow determined to elimination is loaded anew with an amount of organic and inorganic substances from the excess lye introduced and the lye used in the conditioning process and from the dissolved material flow. Impregnation of the catalyst is carried out by rinsing with ammonium solution in the finishing step of the conditioning. The ammonium solution is also discharged into the used MEROX lye mixture after rinsing. All these pollutants add to the load of the waste material flow termed used MEROX lye. The non-regenerable (used) MEROX lye is a significant environmental hazard with a pH of 13 or higher, and a dichromate chemical oxygen demand (COD) in the range of 100000 mgO₂/dm³. Although a COD : BOD value of ≤ 2 and a pH of 7-8 may be achieved by a significant degree of dilution (200-400 fold) and by the addition of an appropriate amount of the neutralizing agent, sulfuric acid in the concentration of 8-10%, it cannot be treated in biological systems due to its high toxicity. A practice of obtaining a material multiple hundreds fold diluted and neutralized with a significant amount of acid in a separate operation system to comply with the treatment requirements for a biodegrading system is neither economically nor ecologically acceptable. This is one of the motivations for the main oil companies to dispose said waste by burning because of its high organic content.

The reaction temperature is in the range of from 150°C to 320°C, on a pressure that assures that the waste material flow is non-volatile, to keep the oxidation reaction with the suitable catalyst in a liquid medium. It is reasonable to approach the lower limits of 10 to 220 bar to decrease expenses. Nonetheless, the unique characteristics of the single contaminant and the receiving medium determine the actual optimum conditions in the disposal treatment process.

We approach the decrease of the expenses of the disposal treatment through the decrease of costs of the wet oxidation. The costs of oxidation may be significantly reduced by decreasing the activation energy needed for the oxidation, i.e. by using the appropriate catalyst. The great number of catalysts developed for this purpose indicates the significance of the problem. Oil refineries do not prefer the use of such catalysts due to the aggressive features of the waste medium, although these catalysts are described as affordable and applicable means in practice (Table 1). The high lye content dissolves the carriers of the majority of catalysts known within a short operation time and the catalyst is made dysfunctional while the carrying away and deposition of the elements of the catalyst cause additional problems.

Oil refineries must be prepared for the processing of a growing amount of waste. On the one hand, a more efficient sulfur recovery is needed due to the tightening environmental standards of motor fuels, consequently the amount of said hazardous waste grows and the costs of disposal by burning increase. Waste flows to be treated will be consequently considerably complex, their composition being unsteady. On the other hand, MEROX lye will be deposited in transitional depots by refineries that cannot afford instant disposal. This practice delays the payment of instant charges but increases the necessary total expenditure of disposal treatment too often.

The main issues in heterogeneous catalytic wet oxidation are the dissolution of the active component of the catalyst used because of the high activity of the lye, the carrying away thereof and the sintering of the catalyst. Metastable carriers having a huge specific surface area, e.g. γAl₂O₃ may undergo phase transition and are, therefore, unsuitable for long term use. The dissolution of the active component concerned, it is likewise of importance which metal may be considered the active metal component and whether the carrier is active. It is apparent, that carrying away can be prevented by the neutralization of the material flow, the controlling of the appropriate pH and solubility, but the expenses thereof may exceed the economic asset obtainable by the use of the catalyst, accordingly, these technologies are not feasible in practice. Attention paid to the active agents has to be extended to the carrier as well. The most suitable carriers are A1-, Hf-, Zr-, and Ti-oxides (i).

**Table 1**

| **Catalysts of the wet oxidation** | | | |
|---|---|---|---|
| **Catalyst** | | **Contaminant to be treated** | **Reference** |
| **Active metal** | **Carrier** | | |
| Cu | aluminate | phenol | ii |
| | aluminate | phenol | iii |
| | aluminate | p-cresol | iv |
| Cu | aluminate, silicate | chlorophenols | v |
| Cu-Zn | aluminate, silicate | phenols | vi |
| Cu-Mg-La | zinc aluminate | acetic acid | vii, viii |
| Mn | aluminate | phenols | ix |
| Mn | SR 115 | chlorophenols | x |
| Mn-Ce | none | PEG | xi. |
| Mn-Zn-Cr | none | industrial waste | xii |
| Cu-Co-Ti-Al | cement | phenol | xiii |
| Co | zeolite | alcohols, amines, etc. | xiv |
| Co-Bi | none | acetic acid | xv |
| Co-Ce | none | ammonia | xvi |
| Fe | silicon dioxide | chlorophenols | xvii |
| Ru | cerium oxide | alcohols, phenol, etc. | xviii |
| Ru | cerium oxide | acetic acid | xix |
| Ru | titanium zirconium oxide | industrial waste | xx |
| Ru-Rh | aluminate | wet oxidized sludge | xxi |
| Pt | titanium oxide | phenols | xxii |
| Pt-Pd | titanium zirconium oxide | industrial waste | xxiii |
| Pt-Pd-Ce | aluminate | black liquor | xxiv |

### BRIEF DESCRIPTION OF THE INVENTION

Prior art has clearly proved that the knowledge of the effective use of precious and non-precious metals in the oxidative disposal treatment of persistent organic material as catalyst suitable for this end exists in the industry. The more suitable the catalyst, the more significant alleviation is feasible in the conditions of the wet oxidation. Not only the organic components make said waste material flow to be considered hard to degrade by oxidation, but also the high alkaline pH of the medium significantly limits heterogeneous catalysis through its solvent properties. When neutralizing a MEROX lye of pH 13-14, containing persistent mercaptan, the neutralizing costs of the process are higher than the calculated expenses of the use of the amount of necessary equivalent acid. The inventors of the present invention have identified the grounds of higher specific acid demand lying in several mechanisms:
- Expected specific acid demand may be determined by titration, according to common chemical practice. This gives the value of the necessary amount based on equivalence. Calculation of the amount of acid necessary for the neutralization of free bases based on the exemplary NaOH:

   *H*₂*SO*₄ + 2*NaOH →Na*₂*SO*₄ + *H*₂*O.*
- One cause of higher acid demand is the degradation of bases encapsulated in a colloid system in a disperse phase, which cannot be exposed by titration; coalescation of components with a high COD value bound in the dispersion, and the separation of phases thereof.
- Another cause of the high acid demand is the hydrolysis of compounds containing hetero atoms.

With the addition of acid, two inflexion points are clearly distinguishable on the titration curve due to the colloid system. The first inflexion point indicates the level necessary for the degradation of the colloid system, for the release of components present in the multiple emulsion system; while the second inflexion point indicates the amount of equivalent acid necessary. The inflexion points corresponding to structural changes due to hydrolysis are on the curve of salt formation. Approximately 10% concentrated sulfuric acid is altogether necessary for the neutralization of the used MEROX lye, what is a required condition for the safe disposal of the waste.

The surprising finding of the present inventors includes that the oxidation process performed with any suitable catalyst should be divided into multiple stages of operational parts. In a first degradation stage eventuates the coalescation of the finely dispersed materials with high COD value in the proximity of the catalyst in conditions changed by the oxidation and as a result of the adsorptive and oxidative effect of the catalyst, and then a catalytic process is added to the physical transport in the coalescing process, whereas the organic material is oxidized before successfully finishing the coalescing process. It is a further surprising finding of the present inventors that the success of the process depends less on the chosen catalyst and conditions of the reaction, rather on the regulation of the colloid features, what facilitates the contacting of the catalyst with the contaminant and therefore necessitates the renewal of the contact surfaces by an operation procedure. There is therefore no need to dilute and/or neutralize the subject substance of the catalytic wet oxidation, which otherwise would increase the operational costs significantly.

The invention provides a process for the disposal treatment of persistent oil refinery waste material flows, which are difficult to degrade under oxidative conditions, by way of performing a continuous, cyclic oxidation disposal treatment in air or oxygen atmosphere, in the presence of known oxidation catalysts and known adsorbent, characterized in that the disposal treatment is carried out in at least two degradation stages, wherein the catalyst/adsorbent volumetric ratio (v/v) in an isolated or separate first reactor is between 0:1 and 1:1 in the first stage and the catalyst/adsorbent volumetric ratio (v/v) in an isolated or separate second reactor is between 1:0 and 1:0.2 in the second stage, and wherein the surface of the adsorbent: catalyst mixture is modified with a 3-50 fold amount of a 0.1-10 N inorganic acid prior to degradation; and wherein degradation is carried out at a pressure of 10-80 bar, at a temperature of 150-280°C, with a space velocity of 0.4-3.6 1/h and at a waste/oxygen ratio (v/v) of 5-500; and wherein optionally the material effluent of the acidic modification is reintroduced into the material flow to be treated.

### DETAILED DESCRIPTION OF THE INVENTION

The process according to the invention is for the disposal treatment of persistent oil refinery waste material flows, which are difficult to degrade under oxidative conditions. The terms "persistent" and "non-biodegradable" as used herein refer to waste material flows, in particular to wastewater, which are toxic to microbiological colonies and/or bacteria degrading contaminants and utilizing them as an energy source; which degrade slowly in the biological system or do not degrade in the biological system. This criterion is defined in the process according to the invention as the ratio of the chemical oxygen demand [COD,mgO₂/dm³] and the biological oxygen demand [BOD, mgO₂/dm³], of which the value may not be higher than about COD : BOD≤2.

Examples of waste material flows conform with the above criterion are oil refinery wastewaters, residual lye of aluminum processing, alkaline residual substances of ore exploration, waste products of hide or skin brining, metal pickling waste products and the like, in particular used MEROX lye. Used MEROX lye comprises about 4-40 g/l of disulfides, about 2-30 g/l of mercaptans, about 0.5-4 g/l of thiols, about 0.3-50-g/l of phenols, about 1-10 g/l of thiophenols and about 0.1-2 g/l hydrocarbons (xxv).

The process according to the invention is carried out as a cyclic oxidation disposal treatment. Air or oxygen atmosphere is applied in the presence of known oxidation catalyst and-known adsorbent during the process. Examples of the known oxidation catalysts are the catalysts shown in Table 1, in particular a compound with Ni-, V- or Ti-content, e. g. Raney-Ni, NiO, V₂O₅ or TiO₂ on an aluminum carrier. Examples of the known adsorbent are used refinery adsorbents, e.g. zeolite, especially bleaching clay used for hot contact refining, e.g. Mg-silicate.

A characteristic feature of the process according to the invention is that disposal treatment is performed in at least two degradation stages, usually in two or three degradation stages, particularly in two degradation stages, at different catalyst/adsorbent volumetric ratios in the different stages.

In an embodiment of the invention the first degradation stage is carried out in an isolated or separate first reactor, wherein the catalyst/adsorbent volumetric ratio (v/v) is usually between 0:1 and 1:1, in particular between 0.1:1 and 0.3:1. The second degradation stage is carried out in an isolated or separate second reactor, wherein the catalyst/adsorbent volumetric ratio (v/v) is usually between 1:0 and 1:0.2, particularly between 1:0 and 1:0.1.

In an other embodiment of the invention the surface of the adsorbent: catalyst mixture is modified with an inorganic acid prior to degradation to activate the catalyst. For example hydrochloric acid, sulfuric acid, phosphoric acid or nitric acid, in particular sulfuric acid may be used as inorganic acid The amount of the inorganic acid relative to the weight of the adsorbent is usually 3-50 fold, in particular 10-20 fold, based on the adsorbent: catalyst mixture. The material effluent of the acidic modification is optionally reintroduced into the material flow to be treated.

The conditions for degradation may be varied in the process according to the invention in a relatively wide range. The process is usually performed at a pressure of 10-80 bar, in particular at 20-50 bar, and/or usually at a temperature of 150-280°C, in particular at 180-220°C, and/or usually at a space velocity of 0.4-3.6 1/h, in particular at 0.8-1.8 1/h; and/or usually at a waste/oxygen ratio of 1:5-500, in particular at 1:5-150.

In another embodiment of the invention different degradation conditions are applied in the first and the second reactor. According to this embodiment degradation is carried out in the first reactor for example usually at a pressure of 10-40 bar, particularly at 10-20 bar, and/or usually at a temperature of 150-200°C, particularly at 180-200°C; and/or usually at a space velocity of 0.4-3.6 1/h, particularly at 1.5-3.2 1/h; and/or usually at a waste/oxygen ratio of 1:5-300, particularly at 1:5-150, while degradation is carried out in the second reactor usually at a pressure of 10-80 bar, particularly at 20-50 bar, and/or usually at a temperature of 150-280°C, particularly at 180-220°C; and/or usually at a space velocity of 0.4-3.61/h, particularly at 0.8-1.81/h; and/or usually at a waste/oxygen ratio of 1:5-500, particularly at 1:200-500.

The process according to the invention may be performed in discontinuous and continuous operation mode. In continuous operation, the activity of the catalyst decreases after a certain time of operation. Therefore, the surface of the adsorbent: catalyst mixture is again modified with 0.1-10 N, particularly 3-5 N inorganic acid, particularly sulfuric acid in an amount of 3-50 fold, in particular 10-20 fold, after 1-36, particularly 12-24 hours of operation to reactivate the catalyst; wherein optionally the material effluent of the acidic modification is reintroduced into the material flow to be treated.

The process according to the invention is feasible in conventional industrial apparatus. Preferably, conventional reactors, settling vessels, containers, pumps and compressors are applicable. The first and the second reactor are usually a tubular reactor, a mulitubular reactor or an autoclave, in particular a tubular reactor. The first and the second reactor may be identical or different.

The process according to the invention may preferably be carried out in the apparatus described in utility models HU 1540 U and HU 1541 U.

The chemical oxygen demand of the material flow cleansed by the process according to the invention is low enough to discharge the material flow into conventional biological wastewater treatment plants.

The invention will be further described by way of the following examples.

### Example 1

A disposal treatment in a reactor system according to Hungarian utility model HU 1540 U with the title *Apparatus for the oxidation disposal of wastewater with high mercaptan content,* was performed, using a TiO₂/A₂O₃ catalyst at a pressure of 80 bar, at a temperature of 260°C at a ratio of air : MEROX of 120:1 (v:v) in a 100 ml flow-through reactor using a space velocity of 11/h. Waste material flow was diluted with refinery waste waterflow in a ratio of 1:3 (v:v). Disposal treatment relative to diluted organic material was almost 85% expressed as COD. Treated material was supplied with a colony of 3%, 3*10⁷ CFU and discharged to biological degradation; biological degradation has apparently been initiated, the biological degradation of the treated material flow has been initiated. Summary of the results of the 10 h chemical and 5 days long biological degradation is shown in table 2.

**Table 2**

| **Feature** | **pH** | **COD mg O₂/l** | **BOD₅, mg O₂/l** | **Yield, %** | **Remark** |
|---|---|---|---|---|---|
| Basic MEROX lye | 13.8 | 40000 | 0 | 100 | |
| Oxidation disposal treatment | 11.4 | 6300 | 49* | 96** | **based on the calcination of the catalyst |

The specific number indicates that the substance is biodegradable to a certain degree, i.e. suitable for biodegradation when properly diluted

### Example 2

Effect of adsorption treatment: 150 g diluted used MEROX lye from Example 1 was homogenized with 15 g bleaching clay in a 400 ml beaker using a homogeniser with high shear stress (IKA T 10 basic ULTRA-TURRAX®) for 10 min at room temperature. Bleaching clay was a regenerated adsorbent from a paraffin factory. 100 g of the substance in dispersion was weighed in an oxidation bomb reactor, 5 g catalyst according to HU 1540 U was added, the reactor was sealed, pressure was set to 80 bar by oxygen and temperature was set at 280°C. The content of the reactor was oxidized for 20 min at a speed of 300 1/min with a magnetic stirrer. After 20 min, the reactor was cooled in a glacial bath, pressure was set to atmospheric by an aqueous pressure absorber, the content of the reactor was filtered and the pH and COD value of the liquid were determined (Table 3).

**Table 3**

| **Feature** | **pH** | **COD mg O₂/l** | **BOD₅, mg O₂/l** | **Yield, %** | **Remark** |
|---|---|---|---|---|---|
| Basic MEROX lye | 13.8 | 40000 | 0 | 100 | |
| Adsorption treatment | 13.7 | 38500 | 28 | 96 | * based on the calcination of the catalyst |
| Oxidation treatment | 11.7 | 5800 | 79 | 98 | * based on the calcination of the catalyst |

Data clearly confirm that degradation of the waste material due to adsorption treatment improves biodegradability despite the slight decrease in chemical oxygen demand; it prepares a significantly greater amount of biodegradation, ergo adsorption pretreatment is beneficial in regards of wet oxidation.

### Example 3

High pressure flow-through reactors of 1 1 and 70 ml were filled with the catalyst of HU 1540 U. Their cross-section excluded, the reactors were identical, electrically heated standing bed systems. Residence time in the first reactor is therefore 15 times as long as in the second reactor. In order to obtain a space velocity equal to the space velocity in the first reactor 1/15 part of the pre-treated, used MEROX lye leaving the first reactor was charged into the second reactor, wherein the stricter conditions were set. Conditions in the first reactor were 0.5 1/h space velocity, temperature of 120°C, pressure of 3 bar. Conditions in the second reactor were 0.5 1/h space velocity, temperature of 200°C, pressure of 20 bar. Features of the material effluents in pH and COD value are shown in Table 4. The features of the treated material flow were obtained in 1 h operation in the first reactor and a continuous 10 h operation in the second reactor. For the decanting of the material effluent from the first to the second reactor an intermedier container was used and gear pump was used for increasing pressure.

**Table 4**

| **Feature** | **pH** | **COD mg O₂/l** | **BOD₅, mg O₂/l** | **Yield, %** | **Remark** |
|---|---|---|---|---|---|
| Basic MEROX lye | 13.8 | 40000 | 0 | 100 | |
| Effluent, first reactor | 13.7 | 38500 | 13 | 99 | mass balance |
| Effluent, second reactor | 10.3 | 6300 | 86 | 99 | mass balance |

Data clearly indicate that degradation of waste according to purpose by a predetermined technology is feasible under moderate reaction conditions and without neutralization.

### Example 4

Two, high pressure flow-through reactors of identical, 70 ml volume were charged with a catalyst; the first reactor containing a 9:1 ratio mixture of Engelhard Nevergreen bleaching clay and the TiO₂/Al₂O₃ catalyst of HU 1540 U, and the second reactor containing only the TiO₂/Al₂O₃ catalyst of HU 1540 U. Temperature was 120°C, pressure 3 bar in the first reactor. A gear pump was used for decanting and to increase pressure. Conditions in the second reactor were: a temperature of 200°C and a pressure of 20 bar. The first and second reactors were regenerated after 10 hours of operation, under atmospheric conditions at a temperature of 60°C with 0.5 N sulfuric acid in an amount of 20-20 times the amount of the load of the catalyst, at a space velocity of 1 1/h. The cycle was repeated 10 times. "Regenerability" of the catalysts is shown in Table 5. The adsorbent produced the signs of slight exhaustion, while the catalyst the signs of slightly improving activity, within the margin of error of the measurement.

**Table 5**

| **Regeneration cycle** | **Effluent, reactor 1** | | **Effluent, reactor 2** | | **Efficiency, %** | |
|---|---|---|---|---|---|---|
| | **pH** | **COD, mg O₂/l** | **pH** | **COD, mg O₂/l** | | |
| 1 | 13.2 | 34100 | 9.7 | 6800 | 14.8 | 80.1 |
| 2 | 12.8 | 35000 | 9.6 | 7200 | 12.5 | 79.4 |
| 3 | 12.9 | 31000 | 10.2 | 7500 | 22.5 | 75.8 |
| 4 | 13.1 | 36000 | 9.9 | 7100 | 10.0 | 80.3 |
| 5 | 12.7 | 39000 | 8.9 | 5200 | 2.5 | 86.7 |
| 6 | 13.1 | 35000 | 9.6 | 6500 | 12.5 | 81.4 |
| 7 | 13.0 | 38000 | 9.2 | 7000 | 5.0 | 81.6 |
| 8 | 12.8 | 31000 | 9.7 | 8600 | 22.5 | 72.3 |
| 9 | 13.5 | 31000 | 8.8 | 6300 | 22.5 | 79.7 |
| 10 | 13.2 | 37000 | 9.2 | 6400 | 7.5 | 82.7 |

The data are convincing that the activity of the catalyst is sustainable with an interim treatment according predetermined technology, it can be regenerated, surprisingly can be slightly improved; the degree of efficiency slightly improves together with the growth of the number of regenerations.

### Example 5

Material flow obtained in the regeneration process of Example 4 was remixed with the basic used MEROX lye of pH 13.5 and COD=40000 mgO₂/l until reaching pH 12.5, and degradation was carried out under the wet oxidation experimental conditions of Example 4 (first reactor: temperature of 120°C, pressure of 3 bar; second reactor: temperature of 200°C, pressure of 20 bar), the catalyst loads of Example 4 were kept unchanged. Results are shown in Table 6. Remixing the regeneration material flow improved the efficiency of degradation slightly.

**Table 6 - Degradation results of used MEROX lye mixed with the regeneration material flow**

| **Feature** | **Mixed basic material flow** | | **Effluent, reactor 1** | | **Effluent, reactor 2** | |
|---|---|---|---|---|---|---|
| | **pH** | **COD, mgO₂/l** | **pH** | **COD, mgO₂/l** | **pH** | **COD, mgO₂/l** |
| Result | 12.5 | 43500 | 8.4 | 35400 | 7.2 | 5800 |

### Example 6

The pressure of the second reactor described in Example 4 was set to 40 bar and all other parameters but temperature were set as in Example 4 to evaluate the degradation effect of the unused catalyst by raising the temperature in the range of 100 - 260°C. Data of the effect of the increase of temperature is summarized in Table 7.

**Table 7 - Effect of temperature on conversion**

| | | | | | | | | | |
|---|---|---|---|---|---|---|---|---|---|
| Temperature, °C | 100 | 140 | 145 | 150 | 200 | 220 | 240 | 250 | 260 |
| Conversion, % | 64 | 71 | 73 | 76 | 85 | 91 | 94 | 95 | 94 |

The skilled person of the technical field may easily conclude from the data that the technology based on the surprising finding of the present inventors is suitable for the disposal treatment of said hazardous wastes and the catalyst is suitable for performing the process under stricter or moderate conditions depending on the composition of the waste.

### References:

- i: Z.Y. Ding, M.A. Frisch, L. Li, E.F. Gloyna: Ind. Eng. Chem. Res., 35 (1996), p. 3257, Luck, F: Wet air oxidation: past, present and future, Catalysis Today, 53., 1,81-91, 1999
- ii: A. Sadana, J.R. Katzer: Ind. Eng. Chem. Fundam., 13 (1974), p. 127
- iii: S. Kim, Y.T. Shah, R.L. Cerro, M.A. Abraham: Proc. AIChE Ann. Meet., Pittsburgh, August 1991, p. 46.
- iv: V.S. Mishra, J.B. Joshi, V.V. Mahajani: Ind. Chem. Eng., 34 (1993), p. 211
- v: R. Sanger, T.T.K. Lee, K.T. Chuang, in: K.J. Smith, E.C. Sanford (Eds.), Progress in Catalysis, Elsevier, 1992, p. 197.
- vi: A. Pintar, J. Levec: Chem. Eng. Sci., 47 (1992), p. 2395
- vii: E.O. Box, Jr., F. Fahra, US Patent 3 823 088 (1974).
- viii: J. Levec, M. Herskowitz, J.M. Smith AIChE J., 22 (1976), p. 919
- ix: A. Sadana, J.R. Katzer: Ind. Eng. Chem. Fundam., 13 (1974), p. 127
- x: A.R. Sanger, T.T.K. Lee, K.T. Chuang, in: K.J. Smith, E.C. Sanford (Eds.), Progress in Catalysis, El-sevier, 1992, p. 197.
- xi: S. Imamura, M. Nakamura, N. Kawabata, J. Yoshida, S. Ishida: Ind. Eng. Chem. Prod. Res. Dev., 25 (1986), p. 34
- xii: D.V. Moses, E.A. Smith, US Patent 2 690 425 (1954).
- xiii: F.K. Shmidt, R.P. Kochetkova, A.F. Babikov, I.P. Shiverskaia, L.I. Shpilevskaia, C.A. Eppel: Proceedings of the 8th French-Soviet Meeting on Catalysis, Novossibirsk, June 1990, p. 140.
- xiv: M.M. Ito, K. Akita, H. Inoue: Ind. Eng. Chem. Res., 28 (1989), p. 894
- xv: S. Imamura, A. Hirano, N. Kawabata: Ind. Eng. Chem. Prod. Res. Dev., 21 (1982), p., 570
- xvi: S. Imamura, A. Doi, S. Ishida: Ind. Eng. Chem. Prod. Res. Dev., 24 (1985), p. 75
- xvii: A.R. Sanger, T.T.K. Lee, K.T. Chuang, in: K.J. Smith, E.C. Sanford (Eds.), Progress in Catalysis, El-sevier, 1992, p. 197.
- xviii: S. Imamura, I. Fukuda, S. Ishida: Ind. Eng. Chem. Res., 27 (1988), p. 718
- xix: J. Barbier Jr., F. Delanoe, F. Jabouille, G. Blanchard, D. Duprez: J. Catal., 177 (1998), p. 378
- xx: Y. Harada, K. Yamasaki: Proceedings of IDA/WRPC World Conference on Desalin.Water Treatment, Yokohama, 1993, p. 231.
- xxi: Y. Takahashi, N. Takeda, T. Aoyagi, K. Tanaka: Proc. 4th Eur. Symp..Space Environ. Control Syst., Florence, ESA SP-324, 1991, Vol. 2, p. 643.
- xxii: C.A. Maugans, A. Akgerman: Wat. Res., 31 (1997), p. 3116
- xxiii: T. Ishii, K. Mitsui, K. Sano, A. Inoue, Eur. Patent 431 932 (1991)
- xxiv: Q. Zhang, K.T. Chuang Appl. Cat. B: Environmental, 17 (1998), p. 321
- xxv: Berne, F, Cordonnie, J: Industrial Water Treatment: Refining, Petrochemicals, and Gas Processing, Editions OPHRYS, 1991

## Claims

1. A process for the disposal treatment of persistent, oil refinery waste material flows, which are difficult to degrade under oxidative conditions, by way of performing a continuous, cyclic oxidation disposal treatment in air or oxygen atmosphere in the presence of known oxidation catalysts, wherein the active catalyst component of the oxidation is a Ni-, V- or Ti-compound, and known adsorbent, wherein the adsorbent is a used refinery adsorbent, **characterized in that** the disposal treatment is carried out in at least two degradation stages, wherein the catalyst/adsorbent volumetric ratio (v/v) in an isolated or separate first reactor is between 0:1 and 1:1 in the first degradation stage and the catalyst/adsorbent volumetric ratio (v/v) in an isolated or separate second reactor is between 1:0 and 1:0.2 in the second degradation stage; and wherein the surface of the adsorbent : catalyst mixture is modified with a 3-50 fold amount of a 0.1-10 N inorganic acid prior to degradation; and wherein degradation is carried out at a pressure of 10-80 bar, at a temperature of 150-280°C, with a space velocity of 0.4-3.6 l/h amd at a waste/oxygen ratio (v/v) of 5-500.

2. The process of claim 1, wherein the volumetric ratio of catalyst/adsorbent in the first degradation stage is between 0.1:1 and 0.3:1, and the volumetric ratio of catalyst/adsorbent in the second degradation stage is between 1:0 and 1:0.1.

3. The process of claim 1 or 2, wherein the process is carried out at a pressure of 20-50 bar; and/or at a temperature of 180-220°C; and/or with a space velocity of 0.8-1.8 1/h; and/or at a ratio of waste/oxygen of 1:5-150; and/or the surface of the adsorbent: catalyst mixture is modified with a 10-20 fold amount of 3-5 N inorganic acid after 12°-24 hours of operation.

4. The proess of any one of claims 1-3, wherein the active catalyst component of the oxidation is Raney-Ni, NiO, V₂O₅ or TiO₂ on an aluminum carrier.

5. The process of any one of claims 1-4, wherein the adsorbent is a bleaching clay used for hot contact refining.

6. The process of any one of claims 1-5, wherein the process is performed in continuous operation mode and the surface of the adsorbent: catalyst mixture is again modified with a 3-50 fold amount of 0.1-10 N inorganic acid after 1-36 hours of operation.

7. The process of any one of claims 1-6, wherein the persistent oil refinery waste material flow which is difficult to degrade under oxidative conditions is a MEROX lye.

## Patentansprüche

1. Verfahren zur Entsorgung von hartnäckigen, unter oxydativen Bedingungen schwer abbaubaren Abfallmaterialströmen aus Erdölraffinerien, indem eine Entsorgung durch kontinuerliche zyklische Oxydation in Luft- oder Sauerstoffatmosphäre bei Anwesenheit von bekannten Oxydationskatalysatoren und eines bekannten Adsorbens vorgenommen wird, wobei die aktive katalysierende Komponente der Oxydation eine Ni-, V- oder Ti-Verbindimg und das Adsorbens ein in Raffinierien verwendetes Adsorbens ist, **dadurch gekennzeichnet, dass** die Entsorgung in mindestens zwei Zersetzungsphasen erfolgt, wobei in der ersten Zersetzungsphase das Volumenverhältnis (v/v) des Katalysators/Adsorbens in einem separierten oder selbständigen ersten Reaktor zwischen 0:1 und 1:1 liegt, und in der zweiten Zersetzungsphase das Volumenverhältnis (v/v) des Katalysators/Adsorbens in einem separierten oder selbständigen zweiten Reaktor zwischen 1:0 und 1:0,2 liegt, und wobei die Oberfläche des Adsorbens-Katalysator-Gemisches vor der Zersetzung mit der 3-50-fachen Menge einer 0,1-10 N anorganischen Säure modifiziert wird, und die Zersetzung bei einem Druck von 10-80 bar, einer Temperatur von 150-280 °C, einer Raumgeschwindigkeit von 0,4-3,6 1/h und einem Abfall-Sauerstoff-Verhältnis (v/v) von 5-500 erfolgt.

2. Verfahren gemäß Anspruch 1, wobei das Volumenverhältnis (v/v) Katalysator/Adsorbens in der ersten Zersetzungsphase zwischen 0,1:1 und 0,3:1 liegt und das Volumenverhältnis (v/v) Katalysator/Adsorbens in der zweiten Zersetzungsphase zwischen 1:0 und 1:0,1 liegt.

3. Verfahren gemäß Anspruch 1 oder 2, wobei das Verfahren bei einem Druck von 20-50 bar und/oder einer Temperatur von 180-220 °C, einer Raumgeschwindigkeit von 0,8-1,8 1/h, und/oder mit einem Abfall-Sauerstoff-Verhältnis von 1:55-150 durchgeführt wird und/oder die Oberfläche des Adsorbens-Katalysator-Gemisches 12-24 Stunden nach dem Vorgang mit der 10-20-fachen Menge einer 3-5 N anorganischen Säure modifiziert wird.

4. Verfahren nach einem der Ansprüche 1-3, wobei die aktive katalysierende Komponente der Oxydation Raney-Ni, NiO, V₂O₅ oder TiO₂ an einem Aluminiumträger ist.

5. Verfahren nach einem der Ansprüche 1-3, wobei das Adsorbens beim Heißkontakt-Raffinieren verwendete Bleicherde ist.

6. Verfahren nach einem der Ansprüche 1-5, wobei das Verfahren in kontinuierlicher Arbeitsweise durchgerührt wird und die Oberfläche des Adsorbens-Katalysator-Gemisches 1-36 Stunden nach dem Vorgang erneut mit der 3-50-fachen Menge einer 0,1-10 N anorganischen Säure modifiziert wird.

7. Verfahren nach einem der Ansprüche 1-6, wobei der hartnäckige, unter oxydativen Bedingungen schwer abbaubare Abfallmaterialstrom eine MEROX-Lauge ist.

## Revendications

1. Un procédé pour le traitement de neutralisation des écoulements de déchets persistants issus de la raffinerie de pétrole, qui sont difficiles à dégrader sous conditionnes oxydatives, en réalisant un traitement de neutralisation oxydative cyclique continue dans l'air or un atmosphère d'oxygène en présence des catalyseurs d'oxydation connus, où le composant catalytique actif de l'oxydation est un composé de Ni, de V ou de Ti, et d'un adsorbant connu, où l'adsorbant est un adsorbant de raffinage utilisé, **caractérisé en ce que** le traitement de neutralisation est réalisé en au moins deux étapes de dégradation, où le rapport volumétrique (v/v) catalyseur/adsorbent dans un premier réacteur isolé ou indépendant est entre 0 : 1 et 1 : 1 dans la premier étape de dégradation et le rapport volumétrique (v/v) catalyseur/adsorbent dans un second réacteur isolé ou indépendant est entre 1 : 0 et 1 : 0,2 dans la second étape de dégradation ; et où la surface du mélange adsorbent : catalyseur est modifiée par une quantité 3-50 fois plus grande d'un acide inorganique de 0,1-10 N avant la dégradation ; et où la dégradation est réalisée sous une pression de 10-80 bar, sous une température de 150-280°C, avec une vitesse spatiale de 0,4-3,61/h et avec un rapport déchet/oxygène (v/v) de 5-500.

2. Le procédé selon la revendication 1, dans lequel le rapport volumétrique catalyseur/adsorbent dans la premier étape de dégradation est entre 0,1 : 1 et 0,3 : 1 et le rapport volumétrique catalyseur/adsorbent dans la second étape de dégradation est entre 1 : 0 et 1 : 0,1.

3. Le procédé selon la revendication 1 ou 2, dans lequel le procédé est réalisé sous une pression de 20-50 bar ; et/ou sous une température de 180-220°C ; et/ou avec une vitesse spatiale de 0,8-1,8 1/h ; et/ou avec un rapport déchet/oxygène de 1:5-150 ; et/ou la surface du mélange adsorbent : catalyseur est modifiée par une quantité 10-20 fois plus grande d'un acide inorganique de 3-5 N après 12-24 heures de l'opération.

4. Le procédé selon l'une quelconque des revendications 1 à 3, dans lequel le composant catalytique actif de l'oxydation est le Ni-Raney, le NiO, le V₂O₅ ou le TiO₂ sur une porteuse en aluminium.

5. Le procédé selon l'une quelconque des revendications 1 à 4, dans lequel l'adsorbant est une argile décolorante utilisée pour le raffinage en contact à chaud.

6. Le procédé selon l'une quelconque des revendications 1 à 5, dans lequel le procédé est réalisé en mode d'opération continu et la surface du mélange adsorbent : catalyseur est modifiée de nouveau par une quantité 3-50 fois plus grande d'un acide inorganique de 0,1-10 N après 1-36 heures de l'opération.

7. Le procédé selon l'une quelconque des revendications 1 à 6, dans lequel l'écoulement de déchets persistants issus de la raffinerie de pétrole, qui est difficile à dégrader sous conditionnes oxydatives est un alkali MEROX.
